# EUROPEAN PATENT APPLICATION

(11) **EP 4 825 490 A1**
(43) Date of publication of application: **21.10.2026**
(21) Application number: 24903619.5
(22) Date of filing: 06.12.2024
(51) Int. Cl.: B01J 27/224, B01J 35/45, B01J 37/04, B01J 37/06, B01J 37/08, H01M 4/86, H01M 4/88, H01M 4/92, H01M 4/96, H01M 8/10

(54) **PLATINUM CATALYST CONTAINING POROUS SILICON CARBIDE COMPOSITE MATERIAL, CATALYTIC ELECTRODE, FUEL CELL, AND METHOD FOR PRODUCING SAID PLATINUM CATALYST**

(30) Priority: 13.12.2023 JP 2023210051
(71) Applicant: DIC Corporation, Tokyo 174-8520 (JP); University of Yamanashi, Kofu-shi, Yamanashi 400-8510 (JP)
(72) Inventor: GOTO, Yusaku, Sakura-shi, Chiba 285-8668 (JP); SADAKUNI, Karin, Sakura-shi, Chiba 285-8668 (JP); KATO, Shinji, Sakura-shi, Chiba 285-8668 (JP); KAKINUMA, Katsuyoshi, Kofu-shi, Yamanashi 400-8510 (JP)
(74) Representative: TBK
(86) International application number: PCT/JP2024/043164
(87) International publication number: WO 2025/126962

(57) **Abstract**

A platinum catalyst including: a porous silicon carbide composite material containing a silicon carbide material containing SiC as a main component and a carbon material; and a platinum nanostructure supported on the porous silicon carbide composite material, in which a supported amount of the platinum nanostructure is 30% to 60% by mass when a total mass of the platinum catalyst is taken as 100% by mass, an intensity ratio of Pt(111)/Pt(200) determined from X-ray diffraction (XRD) is 2.5 to 3.0.

## Description

### Technical Field

The present invention relates to a platinum catalyst containing a porous silicon carbide composite material, a catalytic electrode, a fuel cell, and a method for producing the platinum catalyst.

Priority is claimed on Japanese Patent Application No. 2023-210051, filed December 13, 2023, the content of which is incorporated herein by reference.

### Background Art

A fuel cell is a device that generates power and heat by a chemical reaction to obtain water from hydrogen and oxygen, and there are a plurality of types of fuel cells such as a phosphoric acid fuel cell (PAFC), a molten carbonate fuel cell (MCFC), a solid oxide fuel cell (SOFC), and a polymer electrolyte fuel cell (PEFC). Among these, a polymer electrolyte fuel cell (PEFC) has a structure in which a catalyst layer constituting an anode (fuel electrode) is provided on one surface of a solid polymer electrolyte membrane, a catalyst layer constituting a cathode (air electrode) is provided on the other surface, and a gas diffusion layer is bonded to the outside of each catalyst layer. The catalyst layer is composed of a catalyst-supported carrier including nanoscale support particles on the surface of which a particulate catalyst containing a noble metal is supported with high dispersion.

Currently, a carbon-based material having a high specific surface area and high conductivity is used as the catalyst-supported carrier. However, in the cathode, a decrease in catalytic performance or durability due to corrosion of the carbon support and the like has become a major problem. In addition, in a fuel cell for a commercial vehicle expected to be used for various purposes, higher catalytic activity than in the related art is required. Therefore, it is urgent to develop a high-durability support and a high-activity catalyst as an alternative to carbon. For example, PTL 1 discloses, as a catalyst using a support instead of carbon, an electrode catalyst including (A) Group 13-doped SiC obtained by doping SiC with a Group 13 (Group 3B) element, (B) conductive carbon particles, and (C) a noble metal supported on the surface of (A) the Group 13-doped SiC. The Group 13 element doped in SiC is, for example, aluminum (Al), and the doping amount of the Group 13 element in (A) the Group 13-doped SiC is 1 to 5 mol%, and the ratio [(A):(B)] of (A) the Group 13-doped SiC to (B) the conductive carbon particles is 1:9 to 5:5 in terms of weight ratio.

In addition, as a catalyst exhibiting high activity, NPL 1 discloses a catalyst in which platinum nanowires are supported on a carbon support.

### Citation List

### Patent Literature

PTL 1: JP-A-2010-149008

### Non Patent Literature

NPL 1: X. Duan et al., Science, 2016, 354, 1414-1419.

### Summary of Invention

### Technical Problem

PTL 1 proposes an electrode catalyst including particles in which a noble metal is supported on a surface of Group 13-doped silicon carbide and conductive carbon particles, and the conductivity is imparted to silicon carbide, which is originally poor in conductivity, to reduce resistance. However, there is no mention of durability, and there is room for further investigation. In addition, there is no description regarding the shape of platinum, and it is considered that platinum nanoparticles are supported from a general viewpoint, making it difficult to exhibit activity higher than that of the related art.

NPL 1 describes that platinum supported on a support has a shape in which platinum is one-dimensionally arranged, but since a carbon support is used, the durability is poor. In addition, a method for synthesizing platinum nanowires or the like in advance and supporting the platinum nanowires on a support is complicated and expensive.

An object of the present invention is to provide a platinum catalyst, a catalytic electrode, and a fuel cell, which are excellent in activity and durability, and a production method for obtaining the platinum catalyst with a simple production method and at a low cost.

### Solution to Problem

To achieve the above object, in the present invention, it has been found that a precursor gel is produced by allowing a carbon material serving as a carbon source or an organic polymer to coexist in a sol-gel reaction process of an aqueous solution of an organic alkoxysilane in the presence of a surfactant, with care not to hinder the formation of a porous gel, and the precursor gel is calcined to develop a pore structure (macropore) in a macroscopic region from a pore structure (mesopore) in a mesoscopic region, and a porous silicon carbide composite material in which a carbon material is disposed at a nanoscale in a porous three-dimensional skeletal structure is produced. In addition, it has been found that when a porous silicon carbide composite material, a hydrogen peroxide solution, and a dispersion in which a colloid containing platinum nanoparticles is dispersed are mixed, a mixture in which a platinum oxide colloid is supported on the porous silicon carbide composite material is obtained, and furthermore, when the mixture is heat-treated in an environment of nitrogen and hydrogen, a platinum nanostructure in which a proportion of specific crystal plane is increased is formed, and the catalytic activity is improved.

That is, the present invention provides the following configurations.
[1] A platinum catalyst including:
   a porous silicon carbide composite material including a silicon carbide material containing SiC as a main component and a carbon material; and
   a platinum nanostructure supported on the porous silicon carbide composite material,
   in which a supported amount of the platinum nanostructure is 30% to 60% by mass when a total mass of the platinum catalyst is taken as 100% by mass,
   an intensity ratio of Pt(111)/Pt(200) determined from X-ray diffraction (XRD) is 2.5 to 3.0.
[2] The platinum catalyst according to [1], in which the platinum nanostructure has a connected structure in which a plurality of adjacent platinum nanoparticles are partially connected.
[3] The platinum catalyst according to [2], in which a longitudinal dimension of the platinum nanostructure is 4 nm or more and 20 nm or less, and a transverse dimension of the platinum nanostructure is 2 nm or more and 5 nm or less.
[4] The platinum catalyst according to any one of [1] to [3], in which the carbon material is composed of one or more selected from carbon black, carbon nanofibers, carbon nanotubes, and low-crystallinity nanocarbon.
[5] The platinum catalyst according to any one of [1] to [4], in which an average diameter of primary particles of the silicon carbide material is 20 nm or more and 800 nm or less.
[6] A catalytic electrode including: a layer containing the platinum catalyst according to any one of [1] to [5].
[7] A fuel cell including: the catalytic electrode according to [6].
[8] A method for producing a platinum catalyst, the method including:
   a step (A) of adding an organic alkoxysilane to an acidic aqueous solution containing a surfactant and a pH adjusting agent, adding a carbon material or an organic polymer to the acidic aqueous solution, and forming a gel containing the carbon material or the organic polymer by a sol-gel reaction of the organic alkoxysilane;
   a step (B) of washing the gel with an alcohol;
   a step (C) of drying the washed gel to form a porous silicon carbide precursor;
   a step (D) of calcining the porous silicon carbide precursor to obtain a porous silicon carbide composite material containing a silicon carbide material containing SiC as a main component and the carbon material;
   a step (E) of mixing a dispersion containing a hydrogen peroxide solution and a colloid containing platinum nanoparticles with the porous silicon carbide composite material to obtain a mixture; and
   a step (F) of heat-treating the mixture in an atmosphere of nitrogen and hydrogen to obtain a platinum catalyst containing the platinum nanoparticles.
[9] The method for producing a platinum catalyst according to [8], in which in the step (F), the mixture is heat-treated at 25°C or higher and 800°C or lower.
[10] The method for producing a platinum catalyst according to [8] or [9], further including, after the step (E) and before the step (F): a step (G) of heat-treating the mixture in an atmosphere of nitrogen.
[11] The method for producing a platinum catalyst according to [10], in which in the step (G), the mixture is heat-treated at 100°C or higher and 800°C or lower.
[12] The method for producing a platinum catalyst according to any one of [8] to [11], in which the organic alkoxysilane is represented by Formula (1) or Formula (2),

   R¹-SiR²ₓ(OR³)₃₋ₓ ... (1)

   (in the formula, R¹ is any group selected from a methyl group, an ethyl group, a vinyl group, and a phenyl group, R² represents a methyl group, R³ represents a methyl group or an ethyl group, and an integer x is 0 or 1),

   R⁴-(SiR⁵_{y}(OR⁶)_{3-y})₂ ... (2)

   (in the formula, R⁴ includes any group selected from a methylene group, an ethylene group, a hexylene group, a vinylene group, a phenylene group, and a biphenylene group, R⁵ represents a methyl group, R⁶ represents a methyl group or an ethyl group, and an integer y is 0 or 1).
[13] The method for producing a platinum catalyst according to any one of [8] to [12], in which the carbon material is composed of one or more selected from carbon black, carbon nanofibers, carbon nanotubes, and low-crystallinity nanocarbon.

### Advantageous Effects of Invention

According to the present invention, it is possible to provide a platinum catalyst, a catalytic electrode, and a fuel cell, which are excellent in activity and durability, and a production method for obtaining the platinum catalyst with a simple production method and at a low cost.

### Brief Description of Drawings

[FIG. 1] FIG. 1 is a schematic view showing an example of a configuration of a platinum catalyst according to an embodiment of the present invention.
[FIG. 2] FIG. 2 is an enlarged view showing an example of a configuration of a platinum nanostructure supported on the porous silicon carbide composite material of the platinum catalyst of FIG. 1.
[FIG. 3] FIG. 3 is a flowchart showing an example of a method for producing a platinum catalyst according to an embodiment of the present invention.
[FIG. 4] FIG. 4(A) is a view showing a transmission electron microscope image of the platinum catalyst exemplified in Example 1, FIG. 4(B) is a view showing a transmission electron microscope image of the platinum catalyst exemplified in Example 2, FIG. 4(C) is a view showing a transmission electron microscope image of the platinum catalyst exemplified in Comparative Example 2, and FIG. 4(D) is a view showing a transmission electron microscope image of the platinum catalyst exemplified in Comparative Example 3.
[FIG. 5] FIG. 5(A) is a view showing a secondary electron image in scanning transmission electron microscope observation of a platinum catalyst exemplified in Example 1, and FIG. 5(B) is a view showing a transmission electron image.
[FIG. 6] FIG. 6 is a graph showing a measurement result of cyclic voltammetry (CV) of a platinum catalyst when a supported amount of a platinum nanostructure is changed in a fuel cell single-cell evaluation.
[FIG. 7] FIG. 7 is a graph showing a change in electrochemically active surface area (ECSA) with respect to the supported amount of platinum particles or platinum nanostructures in fuel cell single-cell evaluation.

### Description of Embodiments

### <Configuration of platinum catalyst>

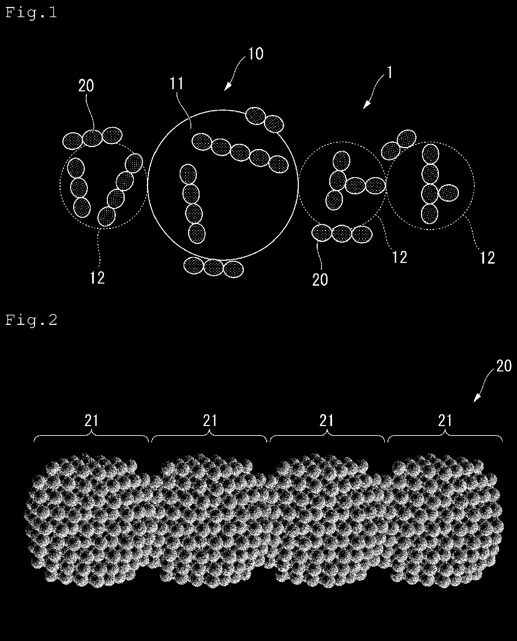

FIG. 1 is a schematic view showing an example of a configuration of a platinum catalyst according to an embodiment of the present invention. As shown in FIG. 1, a platinum catalyst 1 includes a porous silicon carbide composite material 10 including a silicon carbide material 11 containing SiC as a main component and a carbon material 12, and a platinum nanostructure 20 supported on the porous silicon carbide composite material 10.

A form of the platinum catalyst is not particularly limited, but is, for example, a powder form, a particulate form, a fibrous form, or a needle-like form, and among these, a powder form or a particulate form is preferable.

When the platinum catalyst is in a powder form or a particulate form, a particle diameter of the platinum catalyst is not particularly limited, but for example, preferably 0.1 µm or more and 50 µm or less, more preferably 0.1 µm or more and 10 µm or less, and still more preferably 0.1 µm or more and 2 µm or less as a particle diameter D₅₀ at a cumulative value of 50% in a volume-based cumulative particle size distribution.

The particle diameter D₅₀ of the platinum catalyst means a value measured in accordance with JIS Z8825-1:2013, and for example, means a particle diameter D₅₀ measured using a laser diffraction particle size distribution measuring apparatus (manufactured by Shimadzu Corporation, SALD-7000).

A BET specific surface area of the platinum catalyst according to the present embodiment is not particularly limited, but for example, preferably 10 m²/g or more, more preferably 50 m²/g or more, and still more preferably 100 m²/g or more. In addition, the BET specific surface area may be 300 m²/g or less. When the BET specific surface area is 10 m²/g or more, a sufficient supported amount of catalyst particles on a surface of a support is ensured, and desired characteristics such as output and efficiency can be obtained when the platinum catalyst is used for an electrode for a fuel cell. In addition, when the BET specific surface area is 300 m²/g or less, a proportion of mesopores suitable for supporting catalyst is increased. Therefore, a catalyst particle utilization rate can be further improved.

A total pore volume of the platinum catalyst is not particularly limited, but is preferably 0.3 cm³/g or more, more preferably 0.5 cm³/g or more, and particularly preferably 0.6 cm³/g or more. When the total pore volume of the platinum catalyst is 0.3 cm³/g or more, a reaction gas or an electrolyte easily flows in a catalyst layer. Therefore, a catalyst efficiency can be improved.

A pore diameter of the platinum catalyst is not particularly limited, but is preferably 10 nm or more and 1,000 nm or less, more preferably 20 nm or more and 500 nm or less, and particularly preferably 50 nm or more and 300 nm or less. When the pore diameter of the platinum catalyst is 10 nm or more and 1,000 nm or less, a reaction gas or an electrolyte easily flows in a catalyst layer. Therefore, a catalyst efficiency can be improved. In particular, when the pore diameter of the porous silicon carbide composite material is 10 nm or more, supply of a reaction gas or an electrolyte to the supported catalyst particles is stable. Therefore, a decrease in catalyst particle utilization rate can be suppressed.

The BET specific surface area, the total pore volume, and the pore diameter of the platinum catalyst can be calculated as measured values by a gas adsorption method, and mean, for example, values calculated from a condensation of a non-corrosive gas and an adsorption amount when a non-corrosive gas such as nitrogen or argon is adsorbed while changing a relative pressure in an adsorption isotherm using a constant-volume method.

### [Porous silicon carbide composite material]

The porous silicon carbide constituting the platinum catalyst has a three-dimensional skeletal structure in which a plurality of micropores are each independently provided, or a part or all of the plurality of micropores are connected to one another. The BET specific surface area, the total pore volume, and the pore diameter of the porous silicon carbide composite material are the same as the BET specific surface area, the total pore volume, and the pore diameter of the platinum catalyst.

The platinum catalyst according to the present embodiment contains carbon constituting a three-dimensional skeletal structure of porous silicon carbide (SiC) as a support, and a carbon material held in the porous silicon carbide, other than the carbon constituting the three-dimensional skeletal structure.

It is noted that, in the present specification, the porous silicon carbide indicates that silicon carbide is configured by spaces of a three-dimensional network structure in which silicon carbide is connected.

### [Carbon material]

The carbon material is not particularly limited, and for example, can be composed of one or more selected from carbon black, carbon nanofibers, carbon nanotubes, and low-crystallinity nanocarbon. Among these, from the viewpoint of realizing high conductivity and the viewpoint of manufacturability, the carbon material is preferably carbon black.

When the carbon material is composed of carbon black, an average diameter of primary particles of the carbon material is preferably 10 nm or more and 200 nm or less, more preferably 20 nm or more and 100 nm or less, and still more preferably 30 nm or more and 50 nm or less. When the average diameter of the primary particles of the carbon material is 10 nm or more and 200 nm or less, good conductivity can be realized.

When the carbon material is composed of carbon nanofibers or carbon nanotubes, an average diameter of the carbon material is preferably 10 nm or more and 200 nm or less, and a length of the carbon material is preferably 1 µm or more and 20 µm or less.

A content of the carbon material in the porous silicon carbide composite material is preferably 5% by mass or more and 50% by mass or less, more preferably 8% by mass or more and 45% by mass or less, and still more preferably 10% by mass or more and 40% by mass or less. When the content of the carbon material in the porous silicon carbide composite material is 5% by mass or more and 50% by mass or less, it is possible to suppress corrosion of carbon and the like and to improve the durability of the catalytic cycle while realizing high conductivity.

A form and size of the carbon material held in the porous silicon carbide composite material can be actually measured by, for example, transmission electron microscope observation or scanning electron microscope observation. In addition, the average diameter of the primary particles can be obtained, for example, by using image analysis-based particle size distribution measurement software from a microscopic image.

### [Silicon carbide material]

The silicon carbide material in the porous silicon carbide composite material contains SiC as a main component as described above. In the present embodiment, "main component" means that SiC is contained in an amount of 50% by mass or more when the total mass of the silicon carbide material is taken as 100% by mass.

The silicon carbide material may contain SiC as a main component and may contain oxygen (O). In the present embodiment, the "containing oxygen (O)" means that the silicon carbide material contains a silicon oxide such as SiO₂.

A content of the silicon oxide needs only to be less than 50% by mass when the silicon carbide in the porous silicon carbide composite material is taken as 100% by mass, and when the content of the silicon oxide is within the range, the support has excellent durability and the catalyst has excellent activity, which is preferable.

In addition, a mass ratio ([Si]/[0]) of silicon (Si) to oxygen (O) in the porous silicon carbide composite material is not particularly limited, and can be, for example, 1/0.1 to 1/0.001.

### [SiC (silicon carbide)]

An average diameter of primary particles of silicon carbide in the porous silicon carbide composite material is preferably 20 nm or more and 800 nm or less, more preferably 30 nm or more and 500 nm or less, and still more preferably 40 nm or more and 300 nm or less. It is preferable that the average diameter of the primary particles of silicon carbide is 20 nm or more and 800 nm or less since good voids can be obtained when the silicon carbide is used for an electrode.

A particle diameter of silicon carbide in the porous silicon carbide composite material can be actually measured from, for example, transmission electron microscope observation or scanning electron microscope observation. In addition, the average diameter of the primary particles can be obtained, for example, by using image analysis-based particle size distribution measurement software from a microscopic image.

### [Platinum nanostructure]

In the platinum catalyst of the present embodiment, a supported amount of the platinum nanostructure when a total mass of the platinum catalyst is taken as 100% by mass is 30% by mass or more and 60% by mass or less. When the supported amount of the platinum nanostructure is 30% by mass or more and 60% by mass or less, the activity and the durability are excellent. The supported amount of the platinum nanostructure when the total mass of the platinum catalyst is taken as 100% by mass is preferably 30% by mass or more and 50% by mass or less, more preferably 30% by mass or more and 45% by mass or less, and still more preferably 30% by mass or more and 40% by mass or less.

The supported amount of the platinum nanostructure can be calculated by, for example, subjecting the platinum catalyst to alkali fusion, dissolving the platinum catalyst in aqua regia, diluting the platinum catalyst with ultrapure water, and performing inductively coupled plasma optical emission spectrometry (ICP).

In addition, in the present embodiment, an intensity ratio of Pt(111)/Pt(200) determined from X-ray diffraction (XRD) is 2.5 to 3.0. When the intensity ratio of Pt(111)/Pt(200) is 2.5 to 3.0, a proportion of the (111) plane having high activity in the platinum nanostructure is high, and the platinum nanostructure having high activity is supported on the porous silicon carbide composite material, whereby the activity and durability of the platinum catalyst are excellent. The intensity ratio of Pt(111)/Pt(200) determined from X-ray diffraction (XRD) is preferably 2.55 to 3.0, more preferably 2.6 to 2.9, and still more preferably 2.7 to 2.9. The intensity ratio of Pt(111)/Pt(200) determined from X-ray diffraction (XRD) is a value determined from a ratio of a height of a peak attributed to the (111) plane of the crystal structure in the platinum nanostructure to a height of a peak attributed to the (200) plane of the crystal structure.

The platinum nanostructure is composed of particles containing platinum, and is particularly preferably platinum nanoparticles. An average diameter of primary particles of the particles containing platinum is not particularly limited, but is preferably 2 nm or more and 10 nm or less, more preferably 2.5 nm or more and 7 nm or less, and still more preferably 3 nm or more and 5 nm or less. When the average diameter is within the range, it is possible to exhibit satisfactory catalytic performance with a small amount of platinum.

FIG. 2 is an enlarged view showing an example of a configuration of a platinum nanostructure 20 supported on the porous silicon carbide composite material 10 of the platinum catalyst 1 of FIG. 1. As shown in FIG. 1, the platinum nanostructure 20 has a connected structure in which a plurality of adjacent platinum nanoparticles 21, 21, ... are partially connected. More specifically, the platinum nanostructure 20 having a connected structure in which the plurality of platinum nanoparticles 21, 21, ... are one-dimensionally connected is supported on the porous silicon carbide composite material 10 as one unit. As described above, the configuration of the present invention is different from a configuration in which the platinum nanoparticles 21 are supported on the porous silicon carbide composite material as one unit. In FIG. 1, the platinum nanostructure 20 has a connected structure in which a plurality of adjacent platinum nanoparticles 21, 21, ... are one-dimensionally connected, but the present invention is not limited thereto, and the platinum nanostructure 20 may have a connected structure in which a plurality of adjacent platinum nanoparticles 21, 21, ... are connected and branched in a plurality of directions. It is noted that the platinum nanostructure is a structure supported on a silicon carbide material or a carbon material in the porous silicon carbide composite material, and from the viewpoint of satisfactory catalytic performance, the structure is more preferably supported on the silicon carbide material.

The platinum nanostructure is typically an elongated particle having a longitudinal direction and a transverse direction. A longitudinal dimension of the platinum nanostructure is, for example, 4 nm or more and 20 nm or less, and a transverse dimension of the platinum nanostructure is, for example, 2 nm or more and 5 nm or less. When the longitudinal dimension of the platinum nanostructure is 4 nm or more and 20 nm or less and the transverse dimension of the platinum nanostructure is 2 nm or more and 5 nm or less, it contributes to an increase in a proportion of the (111) plane having high activity in the platinum nanostructure, and it is possible to enhance the activity of the platinum catalyst and further enhance the durability by the platinum nanostructure serving as a bridge between silicon carbide and carbon. The longitudinal dimension of the platinum nanostructure may be 4 nm or more and 20 nm or less, 10 nm or more and 20 nm or less, or 15 nm or more and 20 nm or less. In addition, the transverse dimension of the platinum nanostructure may be 2 nm or more and 4 nm or less, or 2 nm or more and 3 nm or less.

In addition, a ratio of the longitudinal dimension to the transverse dimension of the platinum nanostructure may be 1.5 to 10, 3 to 10, or 5 to 10.

The dimensions of the platinum nanostructure in the longitudinal direction and the transverse direction can be calculated from a transmission electron microscope image.

The number of platinum nanoparticles constituting the platinum nanostructure is not particularly limited as long as the intensity ratio of Pt(111)/Pt(200) is within a desired range, but is preferably 2 or more and more preferably 3 or more.

### <Method for producing platinum catalyst>

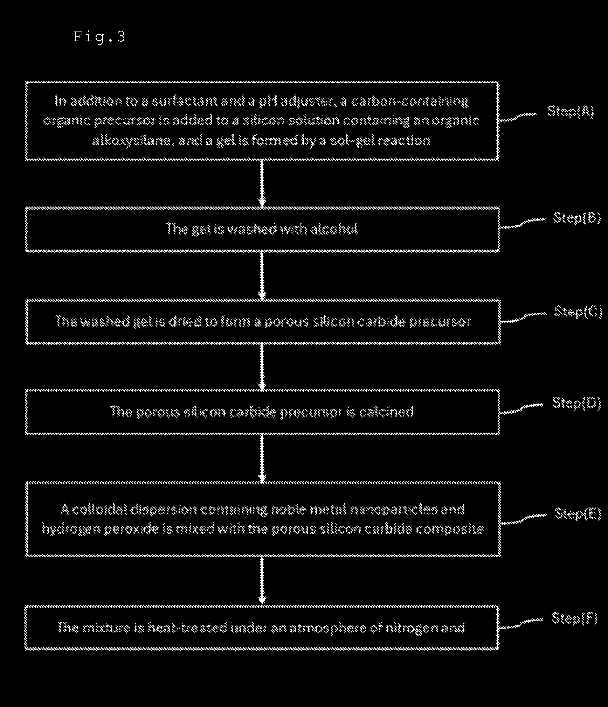

As shown in FIG. 3, a method for producing the porous silicon carbide composite material according to the present embodiment includes a gel formation step (step (A)), a washing step (step (B)), a porous silicon carbide precursor formation step (step (C)), a calcining step (step (D)), a mixing step (step (E)), and a heat treatment step (step (F)). It is noted that other steps other than the above-described steps may be provided before and after each step on the premise that the platinum catalyst according to the present embodiment is obtained.

### [Step (A)]

In the step (A), for example, an organic alkoxysilane is added to an acidic aqueous solution containing a surfactant and a pH adjusting agent, and a gel is formed by a sol-gel reaction of the organic alkoxysilane. For example, a hydrolysate obtained by hydrolyzing a hydrolyzable organic alkoxysilane is generated, furthermore, the pH of the reaction system is increased, and a polycondensation reaction of the organic alkoxysilane is performed to obtain a polysilsesquioxane. The pH suitable for the polycondensation reaction varies depending on the isoelectric point of the organic alkoxysilane to be used, but when the pH is too high, the reaction efficiency may decrease and it may be difficult to form a gel. The sol-gel reaction is preferably performed at 25°C or higher and 80°C or lower, more preferably performed at 30°C or higher and 70°C or lower, and still more preferably performed at 40°C or higher and 60°C or lower. As a result, the polysilsesquioxane can be obtained as a wet gel containing water as a solvent therein.

The content of the surfactant in the acidic aqueous solution is preferably 0.1% by mass or more and 50% by mass or less, more preferably 0.5% by mass or more and 35% by mass or less, and still more preferably 2% by mass or more and 15% by mass or less.

The surfactant is not particularly limited, and examples thereof include a nonionic surfactant and/or a cationic surfactant. By appropriately selecting and using any one or both of the nonionic surfactant and the cationic surfactant as the surfactant, a desired BET specific surface area and pore diameter can be obtained. Examples of the nonionic surfactant include a polyethylene glycol type (ether type, ester-ether type), a polyhydric alcohol type, and the like. Examples of the polyethylene glycol type nonionic surfactant include a Pluronic (registered trademark) type. Examples of the cationic surfactant include an amine salt type, a quaternary ammonium salt type, and the like. By setting the content of the surfactant in the acidic aqueous solution to 0.1% by mass or more and 50% by mass or less, a porous polysilsesquioxane gel having a large BET specific surface area with developed mesopores can be formed.

The content of the pH adjusting agent in the acidic aqueous solution is preferably 5% by mass or more and 50% by mass or less, more preferably 5.5% by mass or more and 35% by mass or less, and still more preferably 6% by mass or more and 23% by mass or less. By setting the content of the pH adjusting agent in the acidic aqueous solution to 5% by mass or more and 50% by mass or less, a porous polysilsesquioxane gel having high skeletal strength and flexibility can be formed.

The pH adjusting agent is not particularly limited, and examples thereof include a substance containing any one selected from urea, ammonia, and sodium hydroxide.

The acidic aqueous solution is not particularly limited, and examples thereof include an aqueous solution of hydrochloric acid, nitric acid, acetic acid, or the like.

The organic alkoxysilane is preferably represented by Formula (1) or Formula (2). By using the organic alkoxysilane represented by Formula (1) or Formula (2), a porous silicon carbide having a desired three-dimensional skeletal structure can be easily formed.

R¹-SiR²ₓ(OR³)₃₋ₓ ... (1)

(In the formula, R¹ is any group selected from a methyl group, an ethyl group, a vinyl group, and a phenyl group, R² represents a methyl group, R³ represents a methyl group or an ethyl group, and an integer x in the formula is 0 or 1.)

R⁴-(SiR⁵_{y}(OR⁶)_{3-y})₂ ... (2)

(In the formula, R⁴ includes any group selected from a methylene group, an ethylene group, a hexylene group, a vinylene group, a phenylene group, and a biphenylene group, R⁵ represents a methyl group, R⁶ represents a methyl group or an ethyl group, and an integer y is 0 or 1.)

Specific examples of the organic alkoxysilane represented by Formula (1) include methyltrimethoxysilane, methyltriethoxysilane, dimethyldimethoxysilane, ethyltrimethoxysilane, ethyltriethoxysilane, methylethyldimethoxysilane, vinyltrimethoxysilane, vinyltriethoxysilane, methylvinyldimethoxysilane, phenyltrimethoxysilane, phenyltriethoxysilane, and methylphenyldimethoxysilane. In addition, specific examples of the organic alkoxysilane represented by Formula (2) include bis(trimethoxysilyl)methane, bis(triethoxysilyl)methane, bis(methyldimethoxysilyl)methane, bis(methyldiethoxysilyl)methane, 1,2-bis(trimethoxysilyl)ethane, 1,2-bis(triethoxysilyl)ethane, 1,2-bis(methyldimethoxysilyl)ethane, 1,2-bis(methyldiethoxysilyl)ethane, 1,6-bis(trimethoxysilyl)hexane, 1,6-bis(triethoxysilyl)hexane, 1,6-bis(methyldimethoxysilyl)hexane, 1,6-bis(methyldiethoxysilyl)hexane, 1,2-bis(trimethoxysilyl)ethene, 1,2-bis(triethoxysilyl)ethene, 1,2-bis(methyldimethoxysilyl)ethene, 1,2-bis(methyldiethoxysilyl)ethene, 1,4-bis(trimethoxysilyl)benzene, 1,4-bis(triethoxysilyl)benzene, 1,4-bis(methyldimethoxysilyl)benzene, 1,4-bis(methyldiethoxysilyl)benzene, 4,4'-bis(trimethoxysilyl)biphenyl, 4,4'-bis(triethoxysilyl)biphenyl, 4,4'-bis(methyldimethoxysilyl)biphenyl, and 4,4'-bis(methyldiethoxysilyl)biphenyl. The above-described ethene derivatives have cis/trans geometric isomers, and any isomer can be used.

In the step (A), a carbon material or an organic polymer is further added to the acidic aqueous solution to form a gel containing the carbon material or the organic polymer. By adding the carbon material or the organic polymer during the sol-gel reaction of the alkoxysilane, the carbon material can be disposed at a nanoscale in the porous three-dimensional skeletal structure after the precursor formed in the step (C) is calcined in the step (D), and excellent conductivity can be imparted to the porous silicon carbide, which is originally an insulator or a semiconductor. The organic polymer undergoes thermal decomposition by being calcined in the step (D) and is held in the porous silicon carbide as low-crystallinity nanocarbon, and the porous silicon carbide can be imparted with conductivity.

In the step (A), it is preferable to add the carbon material or the organic polymer to the acidic aqueous solution such that a mass ratio of the carbon material or the organic polymer to the organic alkoxysilane is 2.5 to 50:97.5 to 50. In addition, the mass ratio of the carbon material or the organic polymer to the organic alkoxysilane is more preferably 3 to 30:97 to 70, and still more preferably 5 to 20:95 to 80. By setting the mass ratio of the carbon material or the organic polymer to the organic alkoxysilane to a value within the range, it is possible to achieve both a larger BET specific surface area and a higher conductivity. When the addition amount of the carbon material or the organic polymer is equal to or less than the addition amount of the organic alkoxysilane, separation from the sol-gel reaction system can be suppressed, and gel formation of polysilsesquioxane can be promoted.

The carbon material is not particularly limited, and for example, can be composed of one or more selected from carbon black, carbon nanofibers, carbon nanotubes, and low-crystallinity nanocarbon. Among these, from the viewpoint of realizing high conductivity and the viewpoint of manufacturability, the carbon material is preferably carbon black.

The organic polymer is not particularly limited, and can be composed of, for example, one or more selected from a phenol resin, polystyrene, and polydivinylbenzene.

### [Step (B)]

In the step (B), the gel obtained in the step (A) is washed with an alcohol. The alcohol used in the washing is not particularly limited, and examples thereof include methanol, ethanol, 1-propanol, and 2-propanol. As a result, it is possible to remove an unnecessary surfactant from the acidic aqueous solution and to replace water in the acidic aqueous solution with an alcohol. In addition, after washing with an alcohol, the solvent may be further replaced with a hydrocarbon-based solvent such as hexane or heptane. In the present step (B), water, which is a high surface tension solvent, is replaced with an alcohol or a hydrocarbon-based solvent, which is a low surface tension solvent, whereby shrinkage of the network can be suppressed in the drying step at room temperature and atmospheric pressure in step (C) described later, and formation of the structure of the porous gel is facilitated.

### [Step (C)]

In the step (C), the washed gel is dried to form a porous silicon carbide precursor. In the step (C), examples thereof include a method of supercritical drying with carbon dioxide at 80°C and 14 MPa, a method of drying at room temperature and atmospheric pressure, a method of vacuum drying at 20°C or higher and 80°C or lower, and the like. Among these, from the viewpoint that manufacturing cost is low and that a porous silicon carbide precursor having a high density and developed mesopores can be obtained when polysilsesquioxane having high skeletal strength and flexibility is formed, a method of drying at room temperature and atmospheric pressure is preferable.

### [Step (D)]

In the step (D), the porous silicon carbide precursor containing the carbon material or the organic polymer is calcined to obtain a porous silicon carbide composite material. In this step, carbon atoms are supplied from the organic group of polysilsesquioxane by calcination, and a silicon carbide skeleton is formed through a carbothermal reduction reaction, but on the other hand, carbon atoms are also supplied to the skeleton from the carbon material or the organic polymer dispersed at a nanoscale in the gel. The thermal decomposition of the organic polymer proceeds by calcination and the organic polymer is held in the porous silicon carbide as low-crystallinity nanocarbon.

The calcination can be performed by a known and conventional method, and is not particularly limited. For example, the calcination is performed by raising the temperature at 2.5°C per minute in an inert gas atmosphere and maintaining the reached highest temperature for a certain period of time. The highest temperature of the calcination is preferably 1,300°C or higher and 3,000°C or lower, more preferably 1,350°C or higher and 2,500°C or lower, and particularly preferably 1,400°C or higher and 2,000°C or lower. The holding time at the highest temperature may be appropriately determined based on an effective time for obtaining the porous silicon carbide composite material, and as an example, the holding time is preferably 5 minutes to 16 hours, more preferably 10 minutes to 10 hours, and particularly preferably 30 minutes to 3 hours. The calcination may be performed in two or more stages. That is, in the first stage, the calcination can be performed at a temperature lower than the highest reached temperature for a certain period of time, and then the temperature can be raised again and the calcination can be performed. The calcination may be performed at atmospheric pressure.

Examples of the inert gas include nitrogen, helium, argon, and the like. It is noted that the inert gas may contain a reducing gas such as hydrogen gas.

The calcination can be performed in a fixed bed or fluidized bed type carbonization furnace, and the heating method and type of the carbonization furnace are not particularly limited as long as the furnace has a function of raising the temperature to a predetermined temperature. Examples of the carbonization furnace include a Riedhammer furnace, a tunnel furnace, a single furnace, and the like.

In the present step (D), a carbon material or an organic polymer can be further mixed with the porous silicon carbide precursor and the mixture can be calcined. Even when the organic polymer is mixed with the porous silicon carbide precursor in the step (D), as in a case of mixing in the step (A), thermal decomposition proceeds by the calcination, and the organic polymer is held in the porous silicon carbide as low-crystallinity nanocarbon.

### [Step (E)]

In the step (E), a dispersion containing a hydrogen peroxide solution and a colloid containing platinum nanoparticles is mixed with the porous silicon carbide composite material to obtain a mixed liquid. The colloid containing platinum nanoparticles is a colloid in which particles containing platinum nanoparticles are dispersed in a liquid, and the dispersion containing the colloid containing platinum nanoparticles is a solution containing a hydrogen peroxide solution and the colloid containing platinum nanoparticles. The colloid containing platinum nanoparticles and the dispersion containing a hydrogen peroxide solution and the colloid containing the platinum nanoparticles can be produced by a known and conventional method.

The mixing ratio of the dispersion containing the colloid containing platinum nanoparticles to the porous silicon carbide composite material is, for example, such that the mass of the supported platinum nanoparticles is preferably 10% by mass or more and 60% by mass or less, more preferably 20% by mass or more and 55% by mass or less, and still more preferably 30% by mass or more and 50% by mass or less with respect to the total mass of the platinum catalyst.

In the present step (E), when the mixed liquid of the dispersion containing a hydrogen peroxide solution and the colloid containing platinum nanoparticles with the porous silicon carbide composite material is stirred, the colloid containing platinum nanoparticles is supported on the porous silicon carbide composite material, and a platinum catalyst containing particles containing platinum nanoparticles can be obtained, and when the mixed liquid is left to stand for a predetermined period of time, a state is reached in which a solid phase and a liquid phase are separated. From the viewpoint of promoting solid-liquid separation, the mixed liquid may be cooled. In addition, the washing of the solid content can be performed by a known and conventional method and under known and conventional conditions. The washing liquid used in the washing is not particularly limited, but is, for example, water, and is preferably ultrapure water. As a result, ions such as chloride ions are removed from the solid content.

### [Step (F)]

In the step (F), the mixture obtained in the step (E) is heat-treated in an atmosphere of nitrogen and hydrogen to obtain a platinum catalyst containing platinum nanoparticles. When the mixture is heat-treated in an atmosphere of nitrogen and hydrogen, a plurality of platinum nanoparticles supported on the porous silicon carbide composite material are connected to each other in a one-dimensional manner, and a Pt(111) plane having high activity is enhanced, and a platinum catalyst having a high intensity ratio of Pt(111) /Pt(200) can be obtained. The concentration of the hydrogen gas in the nitrogen/hydrogen mixed gas for forming the atmosphere of nitrogen and hydrogen is, for example, preferably 0.5% by volume to 4% by volume, and more preferably 1% by volume to 4% by volume.

In the step (F), the temperature at which the mixture is heat-treated is preferably 25°C or higher and 800°C or lower, more preferably 50°C or higher and 600°C or lower, and still more preferably 100°C or higher and 400°C or lower. When the temperature at which the mixture is heat-treated in an atmosphere of nitrogen and hydrogen is 25°C or higher and 800°C or lower, the platinum nanoparticles are more easily connected to each other, and the intensity ratio of Pt(111)/Pt(200) can be further increased. As other conditions for the heat treatment, for example, the mixture can be heated at a heating rate of 1 °C/min to 20 °C/min, and the highest temperature reached can be maintained for a certain period of time. The holding time of the temperature of the present heat treatment can be, for example, 0 to 3 hours.

### [Step (G)]

The method may further include a step (G) of heat-treating the mixture in an atmosphere of nitrogen after the step (E) and before the step (F). When the mixture is heat-treated in an atmosphere of nitrogen as a first stage of the heat treatment, and then heat-treated in an atmosphere of nitrogen and hydrogen as a second stage of the heat treatment, the Pt(111) plane having high activity is further enhanced, and the intensity ratio of Pt(111)/Pt(200) can be further increased.

In the step (G), the temperature at which the mixture is heat-treated is preferably 100°C or higher and 800°C or lower, more preferably 150°C or higher and 600°C or lower, and still more preferably 200°C or higher and 400°C or lower. When the temperature at which the mixture is heat-treated in an atmosphere of nitrogen is 100°C or higher and 800°C or lower, the platinum nanoparticles are more easily connected to each other, and the intensity ratio of Pt(111)/Pt(200) can be further increased. As other conditions for the heat treatment, for example, the mixture can be heated at a heating rate of 1 °C/min to 20 °C/min, and the highest temperature reached can be maintained for a certain period of time. The holding time of the temperature of the present heat treatment can be, for example, 0 minutes to 3 hours.

### [Catalytic electrode and fuel cell]

The catalytic electrode according to the present embodiment has a catalyst layer containing the platinum catalyst. The use of the catalytic electrode is not limited, and the catalytic electrode can be used, for example, as an electrode for a fuel cell. The catalytic electrode typically has the platinum catalyst layer and a gas diffusion layer. The catalytic electrode may be a negative electrode (anode) for a fuel cell or a positive electrode (cathode) for a fuel cell. When the catalytic electrode is a negative electrode for a fuel cell, the negative electrode for a fuel cell has, for example, an anode catalyst layer to which a fuel such as hydrogen is supplied, and a first gas diffusion layer. When the catalytic electrode is a positive electrode for a fuel cell, the positive electrode for a fuel cell has, for example, a cathode catalyst layer to which an oxygen-containing gas such as air is supplied, and a second gas diffusion layer.

In addition, the fuel cell according to the present embodiment includes the catalytic electrode. The fuel cell includes a catalytic electrode and an electrolyte layer. Typically, the fuel cell includes a negative electrode (anode) for a fuel cell, a positive electrode (cathode) for a fuel cell, an electrolyte layer disposed between the negative electrode for a fuel cell and the positive electrode for a fuel cell, a first separator disposed on a side of the negative electrode for a fuel cell opposite to the electrolyte layer, and a second separator disposed on a side of the positive electrode for a fuel cell opposite to the electrolyte layer. In this case, the anode catalyst layer is disposed between the electrolyte layer and the first gas diffusion layer, and the cathode catalyst layer is disposed between the electrolyte layer and the second gas diffusion layer.

According to the catalytic electrode and the fuel cell, since the catalyst layer containing the platinum catalyst is provided, high activity and high durability can be realized by the platinum nanostructure supported on the porous silicon carbide composite material in the platinum catalyst. In addition, by disposing the carbon material at a nanoscale in the silicon carbide having a porous three-dimensional skeletal structure, it is possible to reduce the possibility of oxidative degradation of the carbon material in a high temperature and high humidity environment, which is a problem in the related art. Therefore, it is possible to realize excellent durability as a catalytic electrode and a fuel cell.

### EXAMPLES

Hereinafter, examples of the present invention will be described. The present invention is not limited to the following examples.

### (Example 1)

### [Synthesis of porous silicon carbide composite material]

6 g of a 5 mM acetic acid aqueous solution (manufactured by Kanto Chemical Co., Inc.), 0.8 g of Pluronic (registered trademark) F-127 (manufactured by BASF SE), 0.5 g of urea (manufactured by Kanto Chemical Co., Inc.), and 0.24 g of Ketjen black (manufactured by Lion Specialty Chemicals Co., Ltd., product name "ECP-600JD") were placed in a vial and stirred at room temperature for 10 minutes. 5 g of methyltrimethoxysilane (manufactured by Kanto Chemical Co., Inc.) was added thereto, and the mixture was stirred at room temperature for 30 minutes. Thereafter, the mixture was reacted at 60°C for 4 days to obtain a wet gel. The obtained wet gel was washed with methanol (manufactured by Kanto Chemical Co., Inc.), dried at room temperature and atmospheric pressure for 3 days, and further dried at 80°C and atmospheric pressure for 6 hours to obtain 3.5 g of a porous silicon carbide precursor. 1 g of the porous silicon carbide precursor and 0.4 g of Ketjen black (ECP) were mixed, and the mixture was charged into a tubular furnace and calcined under conditions of raising the temperature to 1,500°C at a heating rate of 2.5 °C/min in an argon atmosphere and holding for 2 hours to obtain a porous silicon carbide composite material.

### [Synthesis of platinum catalyst containing platinum nanoparticles]

0.43 g of chloroplatinic acid hexahydrate was dissolved in 60 mL of ultrapure water, 3.1 g of sodium bisulfite was added thereto to proceed with a reduction reaction, and 280 mL of ultrapure water was added thereto to dilute the mixture. Next, 5% sodium hydroxide aqueous solution was added thereto, and 24 mL of 35% hydrogen peroxide was added dropwise thereto while adjusting the pH to about 5 to obtain a dispersion containing a platinum colloid. Subsequently, the colloid dispersion was fractionated such that the amount of supported platinum (Pt) was 45% by mass with respect to the total amount of the platinum catalyst containing the support, 0.4 g of the porous silicon carbide composite material was added thereto as a support, and the mixture was mixed at 90°C for 3 hours. After cooling, solid-liquid separation was performed, the obtained powder (solid content) was sufficiently washed with ultrapure water to remove chloride ions, and then dried in the atmosphere at 80°C for 12 hours to obtain a platinum catalyst precursor in which a platinum oxide was supported on the surface of the porous silicon carbide composite material.

The platinum catalyst precursor obtained above was placed in an alumina boat, the temperature was raised at 10 °C/min under a nitrogen stream, held at 300°C for 2 hours, and cooled to room temperature. Thereafter, the temperature was raised at 10 °C/min under a nitrogen and hydrogen stream (hydrogen gas concentration in the mixed gas: 1% by volume), held at 100°C for 2 hours, and cooled to room temperature to obtain a platinum catalyst A.

### (Example 2)

A platinum catalyst B was obtained by synthesizing in the same manner as in Example 1, except that after the synthesis of the platinum catalyst precursor, the temperature was raised at 10 °C/min under a nitrogen and hydrogen stream (hydrogen gas concentration in the mixed gas: 1% by volume) and held at 100°C for 2 hours without performing a heat treatment under a nitrogen stream.

### (Example 3)

A platinum catalyst C was obtained by synthesizing in the same manner as in Example 1, except that the preparation was carried out such that the amount of supported platinum (Pt) was 30% by mass with respect to the total amount of the platinum catalyst containing the support.

### (Comparative Example 1)

A platinum catalyst D was obtained in the same manner as in Example 1, except that after the synthesis of the platinum catalyst precursor, the heat treatment was performed only by raising the temperature at 10 °C/min under a nitrogen stream and holding at 300°C for 2 hours without performing a heat treatment under a nitrogen and hydrogen stream.

### (Comparative Example 2)

A platinum catalyst E was obtained by synthesizing in the same manner as in Example 1, except that the preparation was carried out such that the amount of supported platinum (Pt) was 17% by mass with respect to the total amount of the platinum catalyst containing the support.

### (Comparative Example 3)

Pt was supported and heat treatment was performed in the same manner as in Example 1, except that the support was changed to Ketjen black (manufactured by Lion Specialty Chemicals Co., Ltd., product name "CARBON ECP").

### (Comparative Example 4)

As a catalyst, carbon black (Pt/CB) (TEC10E50E, manufactured by Tanaka Kikinzoku Kogyo K.K.) on which platinum (Pt) was supported was obtained.

With respect to Examples 1 to 3 and Comparative Examples 1 to 4, measurements were performed by the following methods.

### [Measurement of Pt supported amount]

The platinum catalyst was subjected to alkali fusion using anhydrous sodium carbonate and sodium peroxide, then dissolved in aqua regia, and diluted with ultrapure water to a specified concentration, and the Pt supported amount was calculated by inductively coupled plasma optical emission spectrometry (ICP; ICPE-9820 type, manufactured by Shimadzu Corporation).

### [Evaluation of catalytic performance using rotating electrode]

### (Production of electrode)

A glassy carbon (GC) electrode having a diameter of 5 mm was polished using an alumina paste, and then subjected to ultrasonic cleaning using ultrapure water. The platinum catalyst A was added to a 99% by volume ethanol aqueous solution and dispersed with an ultrasonic homogenizer. The solution was added dropwise onto a GC disk and dried at room temperature for 12 h. After drying, a 5% Nafion (registered trademark) solution was added dropwise to the platinum catalyst on the GC disk such that the dry film thickness was 50 nm, and the solution was dried at room temperature for 12 h.

### (CV measurement)

The electrode was evaluated using an electrochemical measurement system (HZ-5000, manufactured by HOKUTO DENKO CORPORATION). After purging the 0.1 M perchloric acid aqueous solution with nitrogen gas for 30 minutes, cleaning was performed 50 times in a potential range of 0.05 to 1.2 V at a sweep rate of 150 mV/s using a reversible hydrogen electrode (RHE) as a reference electrode. Thereafter, cyclic voltammetry (CV) measurement was performed in a potential range of 0.05 to 1.0 V at a sweep rate of 100 mV/s. The analysis of the electrochemically active surface area (ECSA) was performed using the hydrogen adsorption wave observed at 0.4 V or less.

### (Evaluation of oxygen reduction activity)

After purging the electrolytic solution with oxygen gas for 1 hour or more, linear sweep voltammetry (LSV) was performed. Data under a total of 8 conditions were acquired at a temperature of 25°C, in a potential range of 0.25 to 1.00 V, at a sweep rate of 5 mV/s, and at a rotation speed increased from 1,000 rpm to 2,750 rpm in increments of 250 rpm. The obtained results were analyzed using a Koutecky-Levich plot to obtain a value of the mass activity (A/g-Pt) at 0.85 V.

### (Evaluation of start-up/shut-down durability)

After purging the electrolytic solution with nitrogen gas for 30 minutes, the potential range of 1.0 to 1.5 V was swept 500 times, and CV measurement was performed in a potential range of 0.05 to 1.0 V. This measurement procedure was set as one set, and a test of 56,000 cycles was performed. The results are shown in Table 1.

**[Table 1]**

| | Catalyst | Pt supported amount | Pt(111)/ Pt(200) | Longitudinal dimension of platinum nanostructure | Transverse dimension of platinum nanostructure | Average value of SiC primary particles | ECSA | Mass activity | Area-specific activity | ECSA retention rate |
|---|---|---|---|---|---|---|---|---|---|---|
| | | (% by mass) | (-) | (nm) | (nm) | (nm) | (m² /g) | (A/g-Pt) | (µA/cm²) | (%) |
| Example 1 | Platinum catalyst A | 45 | 2.8 | 9.4 | 2.9 | 160 | 68 | 780 | 11.4 | 87 |
| Example 2 | Platinum catalyst B | 45 | 2.5 | 6.4 | 3.4 | 160 | 58 | 600 | 10.2 | 85 |
| Example 3 | Platinum catalyst C | 30 | 2.7 | 9.1 | 2.8 | 160 | 87 | 860 | 9. 8 | 83 |
| Comparative Example 1 | Platinum catalyst D | 45 | Not detected | 2.5 | 2.5 | 160 | 52 | 330 | 6. 6 | 79 |
| Comparative Example 2 | Platinum catalyst E | 17 | 2.3 | 3.2 | 3.2 | 160 | 70 | 450 | 6.4 | 76 |
| Comparative Example 3 | Platinum catalyst F | 51 | 2.4 | 4.0 | 3.3 | - | 69 | 550 | 8.0 | 56 |
| Comparative Example 4 | Pt/CB | 46 | 2.1 | 2.9 | 2.9 | - | 71 | 420 | 5.9 | 55 |

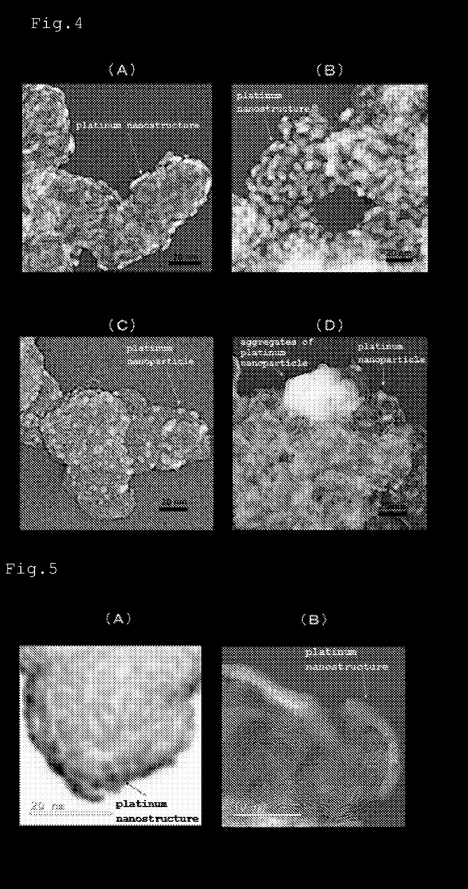

A transmission electron microscope image of the platinum catalyst A obtained in Example 1 is shown in FIG. 4(A), a transmission electron microscope image of the platinum catalyst B obtained in Example 2 is shown in FIG. 4(B), a transmission electron microscope image of the platinum catalyst E obtained in Comparative Example 2 is shown in FIG. 4(C), and a transmission electron microscope image of the platinum catalyst F obtained in Comparative Example 3 is shown in FIG. 4(D). In addition, a secondary electron image of the platinum catalyst A obtained in Example 1 in the scanning transmission electron microscope observation is shown in FIG. 5(A), and a transmission electron image is shown in FIG. 5(B). In Examples 1 and 2, it was confirmed that the elongated platinum nanostructure was supported on the porous silicon carbide composite material. In addition, it was confirmed that the elongated platinum nanostructure had a connected structure in which a plurality of platinum nanoparticles were connected. On the other hand, in Comparative Example 2, it was confirmed that the platinum nanoparticles were supported on the porous silicon carbide composite material. In addition, in Comparative Example 3, it was confirmed that aggregates of platinum nanoparticles, together with platinum nanoparticles, were supported on the carbon black.

In addition, as shown in Table 1, in Examples 1 to 3, the supported amount of the platinum nanostructure in the platinum catalysts A to C was 30% to 45% by mass, the intensity ratio of Pt(111)/Pt(200) was 2.5 to 2.8, the mass activity was 600 (A/g-Pt) or more, the current per unit mass of platinum (Pt) was high, and the area-specific activity was 9.8 µA/cm² or more. Therefore, it was found that high oxygen reduction activity was exhibited. Furthermore, in Examples 1 to 3, the ECSA retention rate was 83% to 87%. Therefore, it was found that excellent durability was exhibited.

On the other hand, in Comparative Example 1, the intensity ratio of Pt(111)/Pt(200) in the platinum catalyst D was not detected, the mass activity was 330 (A/g-Pt), the area-specific activity was 6.6 µA/cm², and the ECSA retention rate was 79%. Therefore, the activity and the durability were inferior.

In Comparative Example 2, the supported amount of platinum in the platinum catalyst E was 17% by mass, the intensity ratio of Pt(111)/Pt(200) was 2.3, the mass activity was 450 (A/g-Pt), the area-specific activity was 6.4 µA/cm², and the ECSA retention rate was 76%. Therefore, the activity and the durability were inferior.

In Comparative Example 3, the supported amount of platinum in the platinum catalyst F was 51% by mass, the intensity ratio of Pt(111)/Pt(200) was 2.4, the mass activity was 550 (A/g-Pt), the area-specific activity was 8.0 µA/cm², and the ECSA retention rate was 56%. Therefore, the activity and the durability were inferior.

In Comparative Example 4, the supported amount of platinum in Pt/CB was 46% by mass, the intensity ratio of Pt(111)/Pt(200) was 2.1, the mass activity was 420 (A/g-Pt), the area-specific activity was 5.9 µA/cm², and the ECSA retention rate was 55%. Therefore, the activity and the durability were inferior.

### (Example 4)

### [Production of fuel cell single cell]

### (Production of anode catalyst ink)

0.45 g of carbon black (Pt/CB, manufactured by Tanaka Kikinzoku Kogyo K.K., TEC10E50E, Pt supported amount: 46 wt%) on which platinum (Pt) was supported and a polymer electrolyte (manufactured by Du Pont, Nafion (registered trademark) DE521) were mixed such that the volume ratio was 1.0, and this mixture, 2.5 g of ethanol, 2 g of water, and a zirconia ball (diameter: 5 mm) were put into a zirconia pot, and mixed by a planetary ball mill (manufactured by FRITSCH, P-6) for 60 minutes. The mixture obtained by the mixing in the ball mill is hereinafter referred to as an anode catalyst ink.

### (Production of cathode catalyst ink)

The platinum catalyst A and a polymer electrolyte (manufactured by Du Pont, Nafion (registered trademark) DE521) were mixed such that the volume ratio was 0.7, and this mixture, 2.5 g of ethanol, 2 g of water, and a zirconia ball (diameter of 5 mm) were put into a zirconia pot, and mixed by a planetary ball mill (manufactured by FRITSCH, P-6) for 60 minutes.

### (Production of membrane electrode assembly (MEA))

For the anode catalyst layer and the cathode catalyst layer, using a spray coating device (manufactured by ACing Technologies Co., Ltd.), the anode catalyst ink and the cathode catalyst ink were each applied to a polymer electrolyte membrane (manufactured by Du Pont, Nafion NR212) such that the platinum loading of the anode was 0.5 mg/cm² and the platinum loading of the cathode was 0.3 mg/cm².

A fuel-cell catalyst-coated membrane (CCM) composed of the anode catalyst layer or the cathode catalyst layer and the polymer electrolyte membrane was hot-pressed (140°C, pressure of 2.86 kN) for 3 minutes with a hot press machine (manufactured by Toho Kogyo Co., TCMD-2.5).

In the above-described CCM, a gas diffusion layer (GDL, manufactured by SGL Carbon SE, 22BB) was laminated on both sides of each catalyst layer, and a membrane electrode assembly (MEA) in which the cathode catalyst layer and the anode catalyst layer were laminated on the polymer electrolyte membrane to face each other was obtained.

A single cell was assembled using the above-described MEA and installed in a power generation evaluation apparatus (manufactured by Panasonic Production Technology Co., Ltd.).

### (Comparative Example 5)

A fuel cell single cell was produced in the same manner as in Example 4, except that the cathode catalyst was changed to the platinum catalyst E.

With respect to Example 4 and Comparative Example 5, measurements were performed by the following methods.

### [Fuel cell single-cell evaluation]

### (CV measurement)

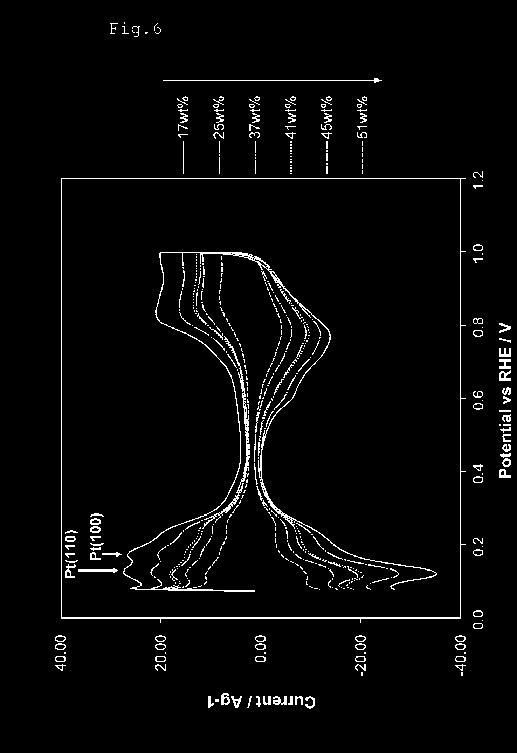

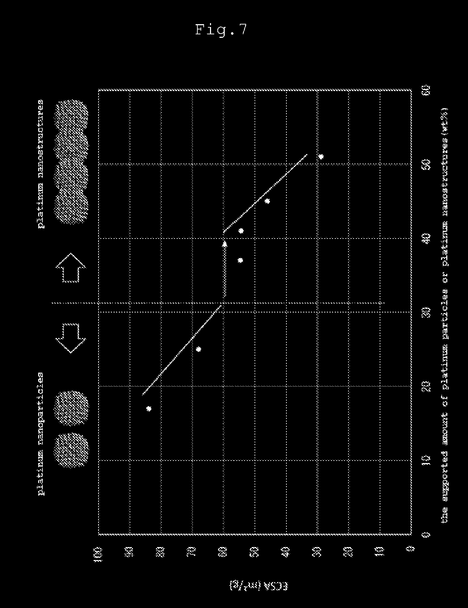

FIG. 6 shows the results of CV measurement performed in a potential range of 0.05 to 1.0 V by supplying hydrogen gas to the anode side of the single cell obtained in Example 4 and blocking the gas on the cathode side. In addition, the synthesis was performed in the same manner as in Example 1, except that the preparation was carried out such that the amount of supported platinum (Pt) was 17% by mass, 25% by mass, 37% by mass, 41% by mass, and 51% by mass with respect to the total amount of the platinum catalyst containing the support, and the CV measurement results of each of the obtained platinum catalysts are shown in the same figure. As a result, it was confirmed that when the Pt supported amount was 30% by mass or more, the ratio (intensity ratio of Pt(100)/Pt(110)) of the peak intensity of Pt(100) to the peak intensity of Pt(110) decreased. In addition, FIG. 7 shows the change in the electrochemically active surface area (ECSA) with respect to the platinum supported amount. It was found that the tendency of the decrease in the ECSA with respect to the Pt supported amount changed around 30% by mass. From the above, it was suggested that, when the Pt supported amount was 30% by mass or more, the Pt(100) planes were connected to each other to form a Pt nanostructure.

### (Measurement of I-V characteristics and cell resistance)

Hydrogen gas was supplied to the anode side of the single cell obtained in Example 4, and oxygen gas was supplied to the cathode side. The flow rate was set such that the utilization rate of the hydrogen gas was 70% and the utilization rate of the oxygen gas was 40%. The anode gas and the cathode gas were each humidified by an external humidifier and then supplied to the single cell. In addition, the temperature of the single cell was adjusted to 80°C, and the humidity of the supply gas was adjusted such that the relative humidity was 80 %RH. Power generation was performed in an applied current range in which the voltage of the single cell did not fall below 0.4 V, and the power generation performance was evaluated. A Tafel plot was created from the obtained data, and the activation overpotential at 1.0 A/cm² was calculated. The results are shown in Table 2.

**[Table 2]**

| | Catalyst | Activation overpotential |
|---|---|---|
| | | (V) |
| Example 4 | Platinum catalyst A | 0.38 |
| Comparative Example 5 | Platinum catalyst E | 0.41 |

As shown in Table 2, in Example 4, when the platinum catalyst A was used for the cathode electrode, the activation overpotential was 0.38 V. Therefore, it was found that the energy loss was small and the more excellent battery performance was exhibited as the fuel cell single cell.

On the other hand, in Comparative Example 5, when the platinum catalyst E was used for the cathode electrode, the activation overpotential was 0.41 V, the energy loss was large, and the battery performance was inferior as the fuel cell single cell.

### Industrial Applicability

The platinum catalyst of the present embodiment is suitable as a material for an electrode used for the catalyst layer of the catalytic electrode because the platinum catalyst is excellent in activity and durability. In particular, the platinum catalyst is capable of accommodating a wide operating temperature range from a temperature in the related art (about 70°C) to a high temperature (120°C or higher) and allowing both the power generation performance and the durability of the fuel cell to be achieved, thereby being extremely useful for a fuel cell for a commercial vehicle expected to be used for various purposes.

### Reference Signs List

1: platinum catalyst
10: porous silicon carbide composite material
11: silicon carbide material
12: carbon material
20: platinum nanostructure
21: platinum nanoparticles

## Claims

1. A platinum catalyst comprising:
a porous silicon carbide composite material including a silicon carbide material containing SiC as a main component and a carbon material; and
a platinum nanostructure supported on the porous silicon carbide composite material,
wherein a supported amount of the platinum nanostructure is 30% to 60% by mass when a total mass of the platinum catalyst is taken as 100% by mass,
an intensity ratio of Pt(111)/Pt(200) determined from X-ray diffraction (XRD) is 2.5 to 3.0.

2. The platinum catalyst according to claim 1,
wherein the platinum nanostructure has a connected structure in which a plurality of adjacent platinum nanoparticles are partially connected.

3. The platinum catalyst according to claim 2,
wherein a longitudinal dimension of the platinum nanostructure is 4 nm or more and 20 nm or less, and a transverse dimension of the platinum nanostructure is 2 nm or more and 5 nm or less.

4. The platinum catalyst according to claim 1,
wherein the carbon material is composed of one or more selected from carbon black, carbon nanofibers, carbon nanotubes, and low-crystallinity nanocarbon.

5. The platinum catalyst according to claim 1,
wherein an average diameter of primary particles of the silicon carbide material is 20 nm or more and 800 nm or less.

6. A catalytic electrode comprising:
a layer containing the platinum catalyst according to any one of claims 1 to 5.

7. A fuel cell comprising:
the catalytic electrode according to claim 6.

8. A method for producing a platinum catalyst, the method comprising:
a step (A) of adding an organic alkoxysilane to an acidic aqueous solution containing a surfactant and a pH adjusting agent, adding a carbon material or an organic polymer to the acidic aqueous solution, and forming a gel containing the carbon material or the organic polymer by a sol-gel reaction of the organic alkoxysilane;
a step (B) of washing the gel with an alcohol;
a step (C) of drying the washed gel to form a porous silicon carbide precursor;
a step (D) of calcining the porous silicon carbide precursor to obtain a porous silicon carbide composite material containing a silicon carbide material containing SiC as a main component and the carbon material;
a step (E) of mixing a dispersion containing a hydrogen peroxide solution and a colloid containing platinum nanoparticles with the porous silicon carbide composite material to obtain a mixture; and
a step (F) of heat-treating the mixture in an atmosphere of nitrogen and hydrogen to obtain a platinum catalyst containing the platinum nanoparticles.

9. The method for producing a platinum catalyst according to claim 8,
wherein, in the step (F), the mixture is heat-treated at 25°C or higher and 800°C or lower.

10. The method for producing a platinum catalyst according to claim 8, further comprising, after the step (E) and before the step (F):
a step (G) of heat-treating the mixture in an atmosphere of nitrogen.

11. The method for producing a platinum catalyst according to claim 10,
wherein, in the step (G), the mixture is heat-treated at 100°C or higher and 800°C or lower.

12. The method for producing a platinum catalyst according to claim 8,
wherein the organic alkoxysilane is represented by Formula (1) or Formula (2),
R¹-SiR²ₓ(OR³)₃₋ₓ ... (1)
(in the formula, R¹ is any group selected from a methyl group, an ethyl group, a vinyl group, and a phenyl group, R² represents a methyl group, R³ represents a methyl group or an ethyl group, and an integer x is 0 or 1),
R⁴-(SiR⁵_{y}(OR⁶)_{3-y})₂ ... (2)
(in the formula, R⁴ includes any group selected from a methylene group, an ethylene group, a hexylene group, a vinylene group, a phenylene group, and a biphenylene group, R⁵ represents a methyl group, R⁶ represents a methyl group or an ethyl group, and an integer y is 0 or 1).

13. The method for producing a platinum catalyst according to claim 8,
wherein the carbon material is composed of one or more selected from carbon black, carbon nanofibers, carbon nanotubes, and low-crystallinity nanocarbon.
